# EUROPEAN PATENT APPLICATION

(11) **EP 1 088 526 A2**
(43) Date of publication of application: **04.04.2001**
(21) Application number: 00120912.1
(22) Date of filing: 26.09.2000
(51) Int. Cl.: A61C 13/00

(54) **Method and apparatus for the manufacturing of dental restorations**

(30) Priority: 01.10.1999 SE 9903561; 04.02.2000 SE 0000361
(71) Applicant: Decim AB, 931 27 Skelleftea (SE)
(72) Inventor: Sjölin, Roger, 93149 Skelleftea (SE)
(74) Representative: Hammar, Ernst

(57) **Abstract**

A manufacturing method for a dental restoration comprises, in addition to the process steps known in the art, the step of at each step registering information about the status of the restoration.

A manufacturing apparatus for performing the inventive method may comprise:
a reading unit for registering geometrical data about the restoration to be manufactured,
a design unit for creating a digital model of the restoration and /or manual adaptation of the model,
a calculating unit for calculating the tool paths corresponding to the model,
a production unit for producing the restoration using the data calculated for the tool paths,
and means for registering information about the actions of each unit regarding one particular restoration.

## Description

### Technical Field

The present invention relates to a manufacturing apparatus for dental restorations and to a method performed by such an apparatus.

### Related Art

CAD/CAM based systems for the manufacturing of dental restorations are known in the art, for example from Sjölin, Sund, Bergman: "The Decim System for Production of Dental Restaurations," International Journal of Computerized Dentistry 1999: 3: 000-000. The system disclosed in the article comprises the following four parts: A reader unit for registering geometric data about the restoration to be made, e.g. from a model, a design unit for making automatic or manual changes to the model, a CAM calculation unit for calculating the tool paths for machining the restoration and a production unit for manufacturing the restoration. The design unit and CAM calculation unit are usually implemented in standard personal computers.

In the system described in this article, a number of automated process steps are performed:
The operator enters information about the case, such as tooth number, the material to be used and the dentist responsible.
The model is scanned by a reader from several different views.
The model is presented on screen, and the operator can edit the model.
The computer calculates the external surface corresponding to the model.
The restoration is manufactured. The tools and type of machine used depend on the type of restoration and the material to be used.

A system like this is only able to handle one or a few restorations at a time.

### Summary of the Invention

The present invention provides a manufacturing apparatus for dental restorations comprising
at least one computer based means for performing at least one process step related to the manufacturing of a dental restoration,
characterized in that it comprises
supervising means arranged to receive from said at least one computer based means information about the process status of the dental restoration and registering and processing said information.

The at least one computer based means may be one or more of the following:
A reading unit for registering geometrical data about the restoration to be manufactured
A design unit for creating a digital model of the restoration and /or manual adaptation of the model
A calculating unit for calculating the external surfaces corresponding to the model
A production unit for producing the restoration using the data calculated for the external surfaces of the model,
Said manufacturing apparatus being characterized in that it comprises means for registering information about the actions of each unit regarding one particular restoration.

The invention also provides a manufacturing method for a dental restoration comprising at least one process step related to the manufacturing of a dental restoration, said method being characterized by the steps of
for said at least one process step performed according to the method, registering information about the process status of the restoration and processing the information.

The at least one process step may be one or more of the following:
Registering geometrical data about the restoration
Creating a digital model of the restoration
Calculating the external surfaces corresponding to the model
Producing the restoration using the data calculated for the external surfaces of the model, said method being characterized by the steps of
At each step registering information about the status of the restoration.

The system according to the invention provides a fully integrated manufacturing process, whereas the systems known in the art, including that of the above mentioned article performs a number of automated process steps, where each process step is more or less isolated from the other steps.

The system according to the invention enables large-scale production of dental restorations, by identifying and solving the problems related to information management which arise in such a system.

Important advantages of the system, or of embodiments of the system are:
According to the invention, the capacity of the system can be increased, and bottlenecks may be identified and eliminated. The flexibility of the system is also increased in that several design units and/or production units may be present. The design unit or production unit having the desired capabilities and correct set of tools may be selected automatically based on type of material, type of restoration etc. In large systems, this may save money, since a variety production units having different characteristic may be used. In this case the most complex cases may be directed to one particular production unit, which is able to process such cases, while the simpler cases may be handled by less expensive machines.
The automatic supervision of a process means that information about a particular restoration is always available, such as information about the stage of the process the restoration is currently in, and the estimated ready time or date.
Statistics may be collected automatically in the system, which may also be used in subsequent processes for estimating time etc. This statistics includes the time required for each processing step, average total time required to produce a restoration, and other data.
Exceptions from the normal production flow can be handled, for example if a step in the production process fails and the case has to loop back to change something in a previous step, or if a case is rejected by a customer.
For example, if is discovered after machining that the design of a case was wrong in some aspect. In this case the status of the case can be moved back in the processing chain to before the step that went wrong, to be handled again. Another example is if it is discovered during CAM calculation that it is not possible to machine a particular case. If this happens, the case status can be changed to "failed" or something equivalent and the information is forwarded, for example, to a production supervisor who may notify the customer.
The manufacturing apparatus may also provide for the registration of process steps performed outside the apparatus itself, for example, the making of the plaster mould, the manual adjustment after machining, or the application of veneering porcelain. In this case, a unit, preferably the managing unit should comprise input terminals for receiving information from registration means located in other places. For example, bar codes could be used on containers holding models of replacements bits, and their movement from one unit to the next could be registered by means of bar code readers.

Yet another advantage of the invention is that it supports traceability of batches of material used and other information about the production process. This other information may include operator identity, hardware identity, the hardware and software versions used and parameter settings. This is vital for the implementation of a quality system for the tooth manufacturing process.

### Brief Description of the Drawings

In the following, embodiments of the system according to the invention will be described in more detail, with particular reference to the drawings, in which:
Figure 1 is a schematic overview of a first embodiment of the system according to the invention.
Figure 2 is a schematic overview of a second embodiment of the system according to the invention.
Figure 3 is a schematic overview of a third embodiment of a part of the system.

### Detailed Description of Embodiments

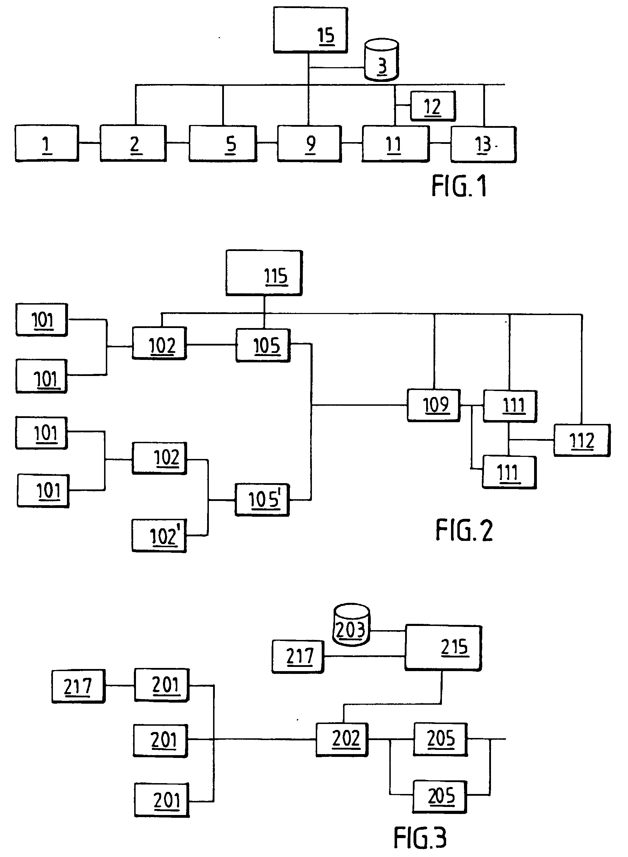

Figure 1 is a schematic overview of an embodiment of the system according to the invention. Each of the units found in the system will be described in more detail below, after an initial overview.

One or more reading units 1 are used for registering geometric data about the restoration that is to be made, by scanning the area in which the restoration is to be used or a model of the restoration. Several different reading units are known in the art. A receiving unit 2 receives the data from the reading unit that is to form the basis for the restoration. Alternatively, the scanning is performed by the receiving unit 2 itself. In the latter case, the case may be received before or after the actual scanning of the model. In both cases, when a new model or data about a new restoration is received, the receiving unit 2 creates a new case in a database 3, as will be discussed in more detail below.

From the receiving unit 2 the information concerning the case is forwarded to a design unit 5 in which, among other things, the data is processed to form a virtual model of the restoration to be made and an operator may make changes to the model, in a way known in the art.

After processing, the data regarding the model is forwarded to a CAM calculation unit 9, which calculates the tool paths to be used when manufacturing the restoration.

The data regarding the tool paths is forwarded to a production unit 11, which is actually a CAM machine, which manufactures the restoration in a way known in the art. The production unit is usually connected to a batch handling unit 12, which is a production planning tool.

When ready, the restoration is handled by the dispatching unit 13, which ensures that all restorations are delivered to the right place and also handles statistics etc.

According to the invention a managing unit 15 is connected to the database 3 and, through the database 3, to all the units above for managing the process, as will be described in more detail in the following. The managing unit 15 also enables an operator to supervise the process and to obtain information about each case at any time.

In Figure 1 each of the receiving 2, design 5, CAM calculation 9 production 11 batch handling 12 and dispatching 13 units is shown connected to the database 3, and the database 3 is located between the other units 2, 5, 9, 11, 12, 13 and the managing unit 15. The reader unit 1 may also be connected to the database 3 or the managing unit 15, although if the reader unit is located remotely, this may not be feasible. Other configurations are possible as long as all units are able to communicate with the managing unit 15, directly or through one or more other units. For example, all units could be connected to the managing unit 15 in such a way that the managing unit 15 would form an interface between the database 3 and the other units 2, 3, 5, 9, 11, 12, 13.

The production system may run on any platform, for example a current working system runs on a PC platform with the operating system Windows NT. The database in this system is implemented on a 400 MHz PC server with 128 Mbyte RAM and 12 Gbyte secondary storage. The design unit and CAM calculator unit are implemented on 400 MHz PCs with 128 Mbyte RAM and 4.3 Gbyte secondary storage. For the other units, the system requirements are less strict.

The receiving unit 2 receives the geometrical data about the model from the reading unit. Each time such data regarding a new model is received, the receiving unit 2 adds a new record in the case database 3. The record preferably comprises the following information:
Identification of the patient and the dentist or dental technician concerned
Information about the type of restoration to be made
Information about the desired material and colour

This information may be entered in the receiving unit 2 by an operator, or may be received from the reading unit 1 together with the geometrical data. In the latter case, an operator must enter them in the reading unit 1, which is the most feasible solution if the reading units are located remotely.

This information may be used to select the appropriate design program and the appropriate production unit, and to schedule the treatment, as will be explained below.

The receiving unit 2 also calculates the time and/or date when each process step is supposed to be finished. This may be based on standard estimates for the duration of each process step, and/or values entered for a particular case. These values may depend, for example, on the complexity of the restoration part to be manufactured, or the urgency of the case, for example a very urgent case may be given a higher priority than a normal case. The current workload may also be taken into account, so that waiting times may be added to the process if many other cases are also being processed at the same time. The receiving unit 2 may also comprise the reading functions, that is the scanning of an area or a model to be reproduced to make a digital representation. The times and dates calculated in this way are stored in the database 3, and may be retrieved from the database e.g. by the managing unit 15, for example by an operator requiring information about a particular case.

The output data from the receiving unit 2 is treated by the design unit 5, which may also be any type of Computer Aided Design (CAD) unit known in the art. The design unit 5 preferably comprises a design tool. Current design tools handle the design of the margin lines of the restoration and also lines that aid in the construction of the restoration, such as crest lines, groove lines and prominent lines. Other ways of designing are perceivable. The design tool should comprise a viewer that allows a three-dimensional representation of the restoration and the processing of the representation of the restoration by an operator, and/or automatically. This processing includes, for example the creation of a margin, and is well known to the skilled person.

Preferably, the design unit 5 comprises a number of software modules, each adapted to the design a particular type of restoration. There may be, for example, one software unit for inlays, one for crowns, one for copings and one for bridges. The type of restoration to be designed in each case may be specified by the operator entering the case in the receiving unit. This information is then forwarded from the receiving unit 2 directly to the design unit 5 or is retrieved by the design unit 5 from the database 3.

The batch handling unit 12 is usually found in connection with the production unit 11. In Figure 1 it is connected to the connection between the production unit 11 and the database 3. The batch handling unit 12 is a tool for production planning. It specifies, based on information found for each case in the database 3, the dimensions and material of the blank that should be used and in which position of the magazine it should be inserted. This step is often carried out manually, but according to the present invention it may also be automated. Preferably a batch consists of 1-20 cases, but this number may vary dependent on the current production situation. The information from the batch handling unit 12 is sent to the production unit 11 directly, with the tool path information or through the managing unit 15. The batch handling unit 12 may also be integrated in the managing unit 15.

The CAM calculation unit 9 is used to calculate tool paths for use when manufacturing the restoration. The tool paths are dependent both on the type of material used in the blank and the types of tool available in the production unit 11. This function is well known in the art.

The production unit 11 is preferably specially designed for the production of different dental restorations. Such production units are known per se. Several production units of the same or different types may also be connected to the system, as will be discussed below.
The production unit 11 preferably comprises a blank magazine for blanks that are to be processed into restorations, and a tool magazine enabling the tools used in the manufacturing to be changed automatically. At present the blanks are placed in the magazine manually, but this may be done automatically in the future, using information retrieved from the database 3.

For each restoration that is to be manufactured the production unit 11 receives information from the managing unit 15 about the position in the blank magazine from which the blank should be retrieved for this particular restoration. Alternatively, this information may be included in the information received from the CAM calculating unit 9.

After production the restoration is handled by the dispatching unit 13. The dispatching unit 13 gets information from the managing unit 15, for example, regarding where the restoration should be sent.

As mentioned above, the managing unit 15 co-operates with all the other units of the system. It receives information about each new case from the receiving unit 2 and stores it in the database 3. For each unit, or each stage of the process, it also receives information about when the unit has received the case and when the unit is done with the case so that the next unit can take over. Most of this information may be entered automatically by each unit. The process may, however, include steps that are performed manually, usually some of the design steps. In this case, the person performing the steps may enter the information manually. It may also be registered automatically when a file corresponding to a particular case is opened and closed again.

By collecting information in this way two important results are achieved: Firstly, an operator can always retrieve information from the managing unit 15 about a particular case, including what is currently being done to the case, estimated time and when the restoration is supposed to be ready. Also, statistics may be kept regarding the number of cases, the time used for each processing step, if there are excessive waiting times in any step, etc. This statistics may be used to improve the system, for example increase the capacity where there is a bottleneck. It may also be used to estimate the time needed for each processing step for a particular case, and the ready time.

A preferred embodiment of the invention is illustrated in Figure 2. The functions of each unit are the same as for the corresponding unit in Figure 1.

As shown in Figure 2 more than one reading, receiving and/or design unit may be used in the system. For illustration purposes four reading units 101 are shown, two of which are connected to a first receiving units 102, and two to a second receiving unit 102. The first receiving unit 102 is connected to a first design unit 105 and the second receiving unit 102 and a third receiving unit 102' is connected to a second design unit 105'. In Figure 2 each of the receiving 102, 102' and design units 105, 105' is connected to a managing unit 115. The managing unit is also connected to a database in such a way that it forms an interface between the other units and the database 3. The reading units 101 may also be connected to the managing unit 115 if this is considered feasible, although this is not the case in Figure 2.

A CAM calculation unit 109 receives information from all the design units 105, 105'. From the CAM calculation unit 109 the data regarding tool paths for each case is sent to one of a number of production units 111 connected to the CAM calculation unit 109. One batch handling unit 112 may be present for each production unit, but preferably, a common batch handling unit 112 is used.

In this embodiment each production unit 111 is a separate machine, and they are all connected to the CAM calculation unit 109, the managing unit 115 and the batch handling unit 112. For simplicity, not all connections to the managing unit are shown in Figure 2. The production units 111 may be identical, or they may have different characteristics, or different sets of tools may be used in the production units. The managing unit 115 directs the data pertaining to each case to the appropriate production unit 111. The appropriate production unit may be selected on the basis of the current work load of each production unit, and, if the production units are not identical, on the characteristics required of the production unit to be able to manufacture the restoration in question.

As mentioned in connection with Figure 1, the batch handling unit 112 handles each case and specifies the type of blank that should be inserted into the blank magazine of the production unit for each restoration, and in which position it should be inserted. If there are more than one production unit present it must also be determined which production unit should be used. Therefore the batch handling unit 112 must either inform the managing unit 115 about the requirements of the restoration in question, or request information from the managing unit 115 about which production unit should be used in each case. Alternatively, the batch handling unit 112 and the managing unit 115 may be implemented as one unit.

It should be understood that the units referred to in the discussion of the Figures may be implemented as software units on the same computer or on two or more interconnected computers, depending on what is considered feasible in each case.

Figure 3 shows a possible configuration of the first part of the system. In this embodiment, the reading functions are not performed by the receiving units, but by separate reading units 201, for example located at a dentist's office. From the reading units 201, the information regarding each case is transmitted to one or more centrally located receiving units 202. This information comprises both the data about the model and other data concerning the case, such as the type of tooth, the desired material and colour, etc. The receiving unit 202 or units then enter the data into the database 203 through a managing unit 215 and forwards the data regarding the model to the design unit 205. In figure 3 only one receiving unit is 202 shown. If there are more than one design unit 205, the receiving unit 202 should comprise the logic required to distribute the cases among the design units. From the design units the case is forwarded to a CAM calculation unit as shown in Figures 1 and 2.

As illustrated in Figure 3, the managing unit 215 may also receive data from one of more other input means 217 arranged to monitor the actions related to the manufacturing process taken by a unit outside the manufacturing apparatus, for example, the handling of a physical model of the replacement to be made before it is scanned by the reading unit 201.

This other input means 217 could be, for example, a bar code reader arranged to register a bar code on a box in which the model was kept. The movement of the box between different stations can be monitored if each station is equipped with a bar code reader feeding information to the managing unit 215 either directly or through one of the other units of the manufacturing apparatus. In Figure 3 a bar code reader 217 is shown connected to the managing unit 215 and one bar code reader 217 is shown connected to one of the reading units 201.

According to a preferred embodiment the managing unit 15, 115, 215 keeps a log for each case specifying the current status of the case and the estimated ready time.

It should be noted that the embodiments illustrated may be combined with each other arbitrarily. The number of units of a particular kind may be chosen as found suitable, and they may be implemented in the same computer or different computers as long as they are able to communicate as described above.

Also, the process described above is intended as an example, based on current process steps usually performed when manufacturing dental restorations, In other systems other steps may be added, or steps may be combined or eliminated, without departing from the inventive way of handling information relating to the manufacturing process.

## Claims

1. A manufacturing apparatus for dental restorations comprising
at least one computer based means for performing at least one process step related to the manufacturing of a dental restoration,
**characterized** in that it comprises
supervising means (3, 15; 115; 203, 215) arranged to receive from said at least one computer based means information about the process status of the dental restoration and registering and processing said information.

2. A manufacturing apparatus according to claim 1, further comprising means for estimating the time needed for said at least one computer based means to perform said actions related to the manufacturing of the dental restoration.

3. A manufacturing apparatus according to claim 1 or 2, wherein said at least one computer based means comprises a design unit (2; 102; 202) for creating a digital model of the restoration and /or manual adaptation of the model.

4. A manufacturing apparatus according to any one of the preceding claims, wherein said at least one computer based means comprises a calculating unit (9; 109) for calculating the tool paths corresponding to the model.

5. A manufacturing apparatus according to any one of the preceding claims, wherein said at least one computer based means comprises a reading unit (1; 101; 201) for registering geometrical data about the restoration to be manufactured and forwarding said data to the design unit (2; 102; 202).

6. A manufacturing apparatus according to any one of the preceding claims, wherein said at least one computer based means comprises a production unit (11; 111) for producing the restoration using the data calculated for the tool paths.

7. A manufacturing apparatus according to any one of the preceding claims, further comprising at least one registration means (217) for registering actions regarding the restoration taken by at least one unit outside the computer based means, said supervising means being provided with input means for receiving information from the at least one registration means.

8. A manufacturing method for a dental restoration comprising at least
one process step related to the manufacturing of a dental restoration, said method being **characterized** by the steps of
for said at least one process step performed according to the method registering information about the process status of the restoration and processing the information.

9. A method according to claim 8, further comprising the step of, for said at least one process step calculate the time required for performing said process step.

10. A method according to claim 8 or 9 comprising the step of
creating a digital model of the restoration.

11. A method according to any one of the claims 8-10, comprising the step of calculating the tool paths corresponding to the model.

12. A method according to any one of the claims 8-11, comprising the step of registering geometrical data about the restoration and using said data when creating a digital model of the restoration.

13. A method according to any one of the claims 8-12, comprising the step of producing the restoration using the data calculated for the tool paths.
